# EUROPEAN PATENT APPLICATION

(11) **EP 2 937 797 A1**
(43) Date of publication of application: **28.10.2015**
(21) Application number: 15163212.2
(22) Date of filing: 10.04.2015
(51) Int. Cl.: G06F 17/30

(54) **SYSTEM AND METHOD FOR SEARCHING A DISTRIBUTED NODE-SHARDED GRAPH**

(30) Priority: 21.04.2014 US 201414257423
(71) Applicant: LinkedIn Corporation, Mountain View, California 94043 (US)
(72) Inventor: Nigam, Abhishek, Mountain View, CA 94043 (US); Cho, SungJu, Mountain View, CA 94043 (US)
(74) Representative: D Young & Co LLP

(57) **Abstract**

A system, apparatus, and methods are provided for searching a distributed graph sharded by node. A controller receives a query that warrants or requires a breadth-first search commencing at an origination node. The controller issues a search request to a first data server that maintains the origination node, with an identifier of other criteria (e.g., a destination node) and with any applicable execution parameters, which may cause the search to terminate early or may cause some results to be pruned. If the first data server cannot resolve the request, it propagates the search to one or more other data servers storing other nodes (e.g., nodes that are directly connected to the origination node), and forwards the execution parameters and any partial results (e.g., partial paths) that it may have generated. Those data servers will process the search request, return responsive results to the controller, and/or further propagate the request.

## Description

### FIELD

This disclosure relates to the fields of databases and computer systems.

### BACKGROUND

This disclosure relates to searching databases and computer systems. More particularly, a system and methods are provided for searching a distributed graph, database, or other collection of data.

Large databases are often horizontally partitioned by separately storing different sets of database rows of a single schema, usually on a single server. One benefit of horizontal partitioning is the reduced size of the indexes corresponding to the partitions. Sharding extends this concept by partitioning database rows across multiple instances of a schema, thereby allowing a large database table to be divided across multiple servers; separate indexes are used to manage each partition.

For example, a large graph comprising millions of nodes and edges connecting those nodes may be too large to store in a single repository, and may therefore be distributed across or among multiple repositories.

### SUMMARY

The invention is defined in the appended claims.

### DESCRIPTION OF THE FIGURES

Figure 1 is a block diagram depicting a computing environment in which one or more embodiments may be implemented.
Figure 2 is a block diagram depicting apparatus and a method for executing a breadth-first search of a distributed graph, in accordance with some embodiments.
Figure 3 is a flow chart demonstrating a method of executing a breadth-first search of a distributed graph, in accordance with some embodiments.
Figure 4 is a block diagram of an apparatus for searching a distributed graph that has been sharded by node, in accordance with some embodiments.

### DETAILED DESCRIPTION

The following description is presented to enable any person skilled in the art to make and use the disclosed embodiments, and is provided in the context of one or more particular applications and their requirements. Various modifications to the disclosed embodiments will be readily apparent to those skilled in the art, and the general principles defined herein may be applied to other embodiments and applications without departing from the scope of those that are disclosed. Thus, the invention or inventions associated with this disclosure are not intended to be limited to the embodiments shown, but rather is to be accorded the widest scope consistent with the disclosure.

In some embodiments, a system and methods are provided for searching a computer-implemented database distributed across multiple data servers. The database stores information about entities and connections between entities as a graph of nodes joined by edges. The nodes correspond to entities and the edges correspond to connections. Data for the graph is distributed across the multiple data servers. Each data server represents a node repository storing a shard of the distributed graph data, and each shard comprises graph data for a set of one or more nodes of the graph.

In some of these (and other) embodiments, a system and methods are provided for executing searches or queries on a distributed graph that has been sharded or horizontally partitioned, by node, across multiple logical or physical data servers. From the following description, other embodiments may be readily developed for use with other types of data that are configured in a manner conducive to sharding or horizontal partitioning.

The system includes the multiple data servers and accompanying logic for receiving and responding to queries, and the methods provide for rapid return of query responses from individual servers while allowing for dynamic adjustment of a query to terminate the query early, to prune results, or to otherwise affect execution of the query and/or a response to the query.

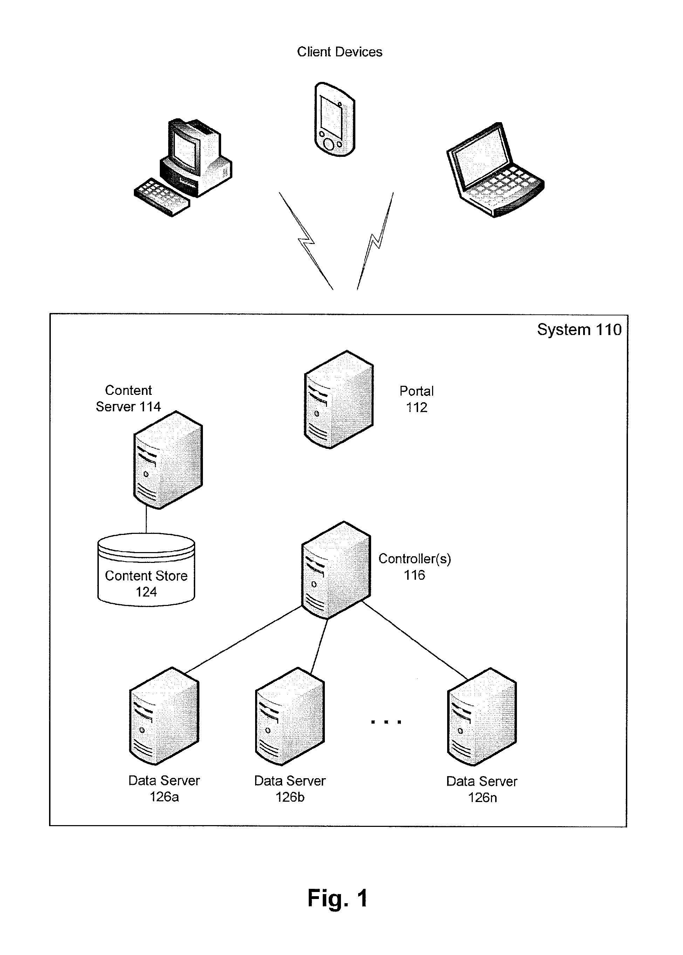

Figure 1 is a block diagram of a system for searching a horizontally partitioned or sharded set of data, such as a distributed graph, according to some embodiments. System 110 may illustratively be implemented as or within a data center of an organization that hosts an online application or service that maintains the data.

In some particular implementations, system 110 is operated within a professional or social networking service or system that helps members create, develop, and maintain professional (and personal) relationships, as provided by Linkedln^{®} Corporation, for example. Illustratively, in these implementations the data may represent the members and their connections to each other.

Members or users of a service or application offered by system 110 connect to the system via client devices, which may be stationary (e.g., desktop computer, workstation) and/or mobile (e.g., smart phone, table computer, laptop computer). The client devices operate suitable client applications, such as a browser program or an application designed specifically to access the service(s) offered by system 110. Users of system 110 may be termed members because they may be required to register with the system in order to fully access the available services.

User connections are generally made through portal 112, which may comprise an application server, a web server, and/or some other gateway or entry point. System 110 also includes content server 114, controller(s) 116, content store 124, and data servers 126.

As part of the services it offers, system 110 serves content for presentation to users via their client devices. The content that is served may include status updates, messages, advertisements, offers, announcements, job listings, news, and so on, and may be or may include any type of media (e.g., text, images, video, audio). System 110 may serve content generated by users of the system's services, and/or content supplied by third parties for delivery to users of those services.

Content server 114 maintains one or more repositories of content items for serving to members (e.g., content store 124), an index of the content items, and/or other information useful in serving content to members. Illustratively, content server 114 may serve on the order of hundreds of millions of content items every day, for each of which the system may store an event record (in addition to data reflecting other user activity).

As indicated above, content store 124 may include various types of content and content items, including status updates, information released by members and possibly non-members (e.g., announcements, messages, comments, posts), documents, advertisements (e.g., both revenue and non-revenue ads), job listings, media content (e.g., images, video, audio), and so on, for serving to members and/or for use by various components of system 110. Content server 114 (or some other component of system 110) may include a recommendation module for recommending content to serve to a member.

Members of a service hosted by system 110 have corresponding pages (e.g., web pages, content pages) on the system, which they may use to facilitate their activities with the system and with each other. These pages (or information provided to members via these pages) are available to some or all other members to visit in order to browse messages, announcements, and/or other information provided by or associated with the corresponding member. Members' pages may be stored on a component of system 110 depicted in Figure 1, or on a component not shown in the figure.

Data servers 116 store data representing a graph of members' connections, in which each node corresponds to one member or user (or other entity), and each edge between two nodes corresponds to a relationship between the members/users/entitie represented by the two nodes. In different embodiments, relationships may be explicit, implicit, or a combination of explicit and implicit.

An explicit relationship is formed when one member directly requests a relationship with another member and that other member assents. An implicit relationship is formed through more casual types of contact, such as when one member sends a message to another (e.g., a chat message, an electronic mail message), when one member endorses another member, when one member responds to an action of another member (e.g., by commenting on it, by "liking" it), when two members exhibit identical or similar behavior or interests (e.g., by mutually "liking" or "sharing" one or more content items), and/or in other ways. Members of a group may be connected by explicit or implicit relationships.

The network of members of a service offered by system 110 may number in the tens or hundreds of millions. Accordingly, a graph of the members' connections may be distributed among any number of data servers 126. In some embodiments, the graph data is sharded by node (e.g., member), with each data server responsible for maintaining some number of nodes. A node stored by a data server may include some or all attributes of the corresponding member. In particular, a node includes or is accompanied by information identifying all other members to which the corresponding member is directly connected. In other words, a node's data may include all edges that connect to that node, and each edge identifies a node at the other end of that edge. Methods of searching the sharded graph data are described further below.

System 110 may include other components not illustrated in Figure 1. For example, in some embodiments system 110 may include a profile server to maintain profiles, in a profile database, of members of the service(s) hosted by system 110.

An individual member's profile may reflect any number of attributes or characteristics of the member, including personal (e.g., gender, age or age range, interests, hobbies, member ID), professional (e.g., employment status, job title, functional area or industry, employer, skills, endorsements, professional awards), social (e.g., organizations the user is a member of, geographic area of residence, friends), educational (e.g., degree(s), university attended, other training), etc. A member's profile, or attributes or dimensions of a member's profile, may be used in various ways by system components (e.g., to identify who sent a message, to identify a recipient of a status update, to record a content-delivery event).

Organizations may also be members of the service (i.e., in addition to individuals), and may have associated descriptions or profiles comprising attributes such as industry (e.g., information technology, manufacturing, finance), size, location, goal, etc. An "organization" may be a company, a corporation, a partnership, a firm, a government agency or entity, a not-for-profit entity, an online community (e.g., a user group), or some other entity formed for virtually any purpose (e.g., professional, social, educational).

Profile servers may be combined with data servers 126, such that each data server maintains entire profiles of the members corresponding to the nodes stored on the server. Alternatively, data servers 126 may be distinct from profile servers, in which case the data servers will store and maintain sufficient member/user information to facilitate searches of and queries on the distributed graph, and the profile servers will store other member information, but there may be overlap between the member information stored on the data servers and on the profile servers.

The functionality of system 110 may be distributed among the illustrated components in an alternative manner, such as by merging or further dividing functions of one or more components, or may be distributed among a different collection of components. Yet further, while depicted as separate hardware components (e.g., computer servers) in Figure 1, one or more of portal 112, content server 114, controller 116, and data servers 126 may alternatively be implemented as separate software modules executing on one or more computer servers. Thus, although only a single instance of a particular component of system 110 may be illustrated in Figure 1, it should be understood that multiple instances of some or all components may be utilized. Further, each data server 126 may be replicated or mirrored.

In some specific embodiments, each node of a node-sharded graph distributed across data servers 126 represents an individual member of a service hosted by system 110, a group or team that includes multiple members, or an organization or a portion of an organization. Nodes of a given distributed graph may be homogeneous (i.e., all represent the same type of entity), or heterogeneous (i.e., different nodes represent different types of entities).

In these embodiments, edges may also be homogeneous or heterogeneous. By way of illustration, and without limiting other embodiments, a given edge may connect two explicitly (or implicitly) connected members, or may represent one member following another member (e.g., an influencer), a member belonging to a team or a group, or a member (or a team or group) working at or following a particular organization, etc.

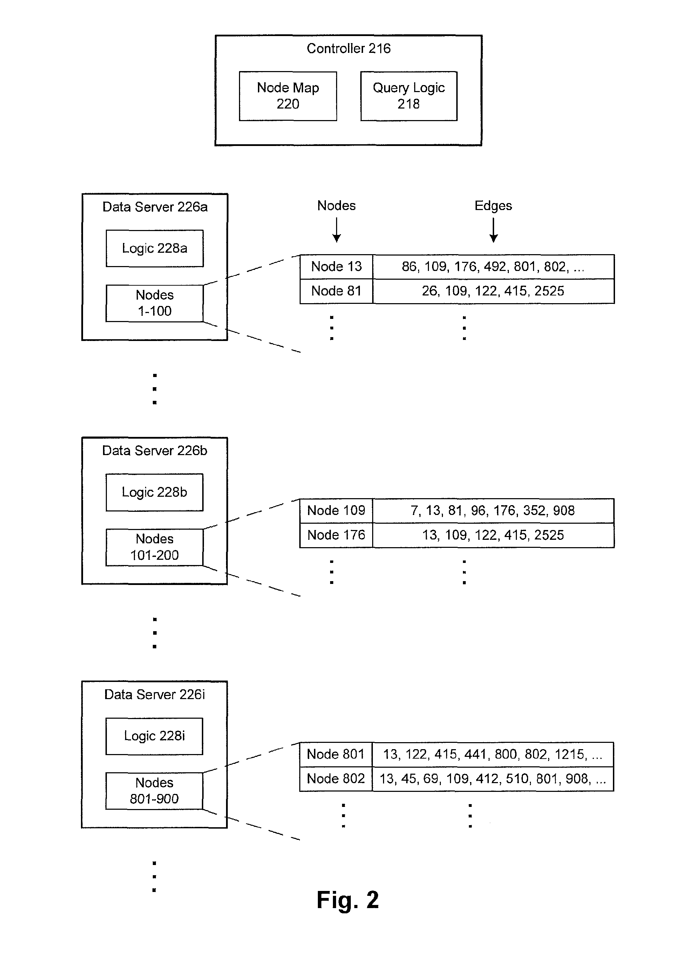

Figure 2 is a block diagram depicting apparatus for executing a breadth-first search of a distributed graph, according to some embodiments. In these embodiments, data servers 226 (e.g., servers 226a, 226b, 226i) store portions of a large graph, which may illustratively be a node-sharded graph of members of a professional or social network as discussed in conjunction with Figure 1.

Controller 216 controls the execution of queries and searches on the graph, and includes node map 220 that identifies the location of each graph node (i.e., the data server on which the node is stored), and logic for executing queries/searches. Although discussed in the context of a breadth-first search, the apparatus of Figure 2 may alternatively be employed to perform a depth-first search in other embodiments.

Illustratively, a breadth-first search might be used to find the shortest path between two nodes, to identify all nodes within one connected component, and/or for other purposes.

For example, a query may be executed to identify one or more nodes through which a given origination node is connected to a given destination node. In the context of a distributed graph representing a professional or social network, this facilitates identification of paths between two members.

As another example, it may be desirable to identify nodes that are some set distance away from a given node, or within some range of distances, and that possess one or more particular attributes. By way of illustration, 2^{nd} degree connections of a given node are located two hops (i.e., two edges) away from that node. Thus, N^{th} degree connections may be readily identified and then analyzed for some purpose (e.g., to identify nodes that have a specified attribute in common).

Each data server 226 stores node data comprising some number of nodes, and therefore may be considered a "node repository". Alternatively, a "node repository" may refer to a storage device or component that stores node data. For the purpose of illustration, and without limitation, each server maintains approximately 100 nodes in the environment of Figure 2. In other embodiments, different servers may store different numbers of nodes. Each server also includes logic 228 for facilitating execution of a query or search on the graph.

In other embodiments, data servers 226 may include other elements. For example, a data server may include node map 220, a subset of node map 220 (e.g., to identify repositories of all nodes directly connected to nodes stored at the data server), and/or other information associated with a distributed graph. As another example, a data server may include one or more inverted indexes. An illustrative inverted index may identify all nodes that are directly connected to the data server's node but not stored on that data server, may identify all nodes on the data server that possess a given attribute (or a given set of attributes), etc.

Portions of the node data stored at each data server are illustrated (e.g., nodes 13 and 81 of data server 226a, nodes 801 and 802 of data server 226i). In these embodiments, each node's data identifies the node and all of the edges connected to the node; other data may be stored in other embodiments (e.g., other attributes of the node or the member corresponding to the node). Illustratively, the edges are ordered by identifiers of the nodes at the other ends of the edges.

In some embodiments, edges have attributes that may be stored at one or both nodes connected via the edge. An edge's attributes may illustratively identify when and/or how the edge was formed, may identify one or more attributes that are common to both nodes, etc.

Query logic 218, 228 includes instructions for execution by the controller and the data servers to receive a search request (or a query), process the request, reissue the request or a follow-on request to other data servers as necessary, and to return the results.

In an illustrative implementation of a method for searching a distributed node-sharded graph, controller 216 receives a query from an operator or other component of the system or data center in which the apparatus of Figure 2 operates. The query may illustratively originate from an application, a service, or other software executing on some other computing apparatus of the system or data center.

The controller then dispatches the search request to at least one of the data servers. That data server may provide a full or partial response to the request (e.g., depending on whether it possesses all the necessary information), and may also or instead propagate it to one or more peer data servers. For example, a breadth-first search of the graph may require the first data server to disseminate the request to other data servers that maintain nodes that are directly connected to a node maintained by the first data server, and the request may propagate among the data servers until one or more results are identified (and returned to the controller), or until the search is terminated or otherwise modified.

One of ordinary skill in the art will appreciate that this differs from traditional methods of conducting a breadth-first search, wherein each data server only communicates with the controller, and is incapable of propagating the search request by forwarding it directly to another data server.

Multiple controllers 216 may be implemented, perhaps as part of a load-balancing scheme. Similarly, each data server 226 may represent a cluster or other cooperative group of servers maintaining one set of nodes, and/or individual data servers' data may be replicated, mirrored, or otherwise duplicated.

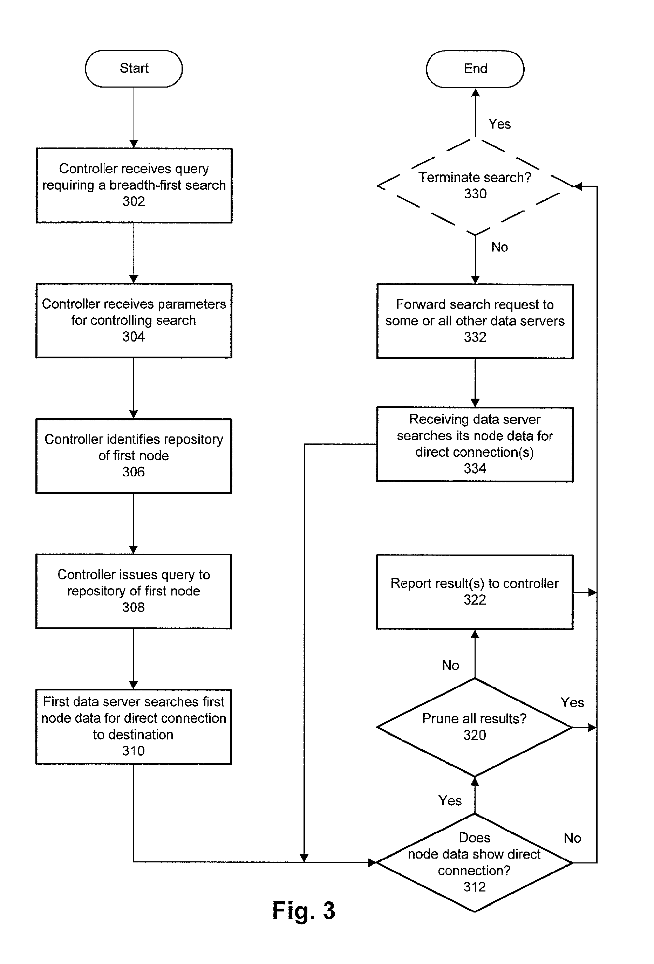

Figure 3 is a flow chart demonstrating a method of executing a breadth-first search of a distributed graph, according to some embodiments. This method is described as it may be implemented on the apparatus of Figure 2, in which a large graph is sharded by node, but is not limited to implementation with such apparatus or such data.

In operation 302, a controller (e.g., controller 216) receives a breadth-first search request, or a query that requires or warrants execution of a breadth-first search of the graph. For example, a request may be received for the shortest path from one node to another node. For purposes of discussion, it will be assumed that the two nodes correspond to members 176 and 802, respectively. Thus, the search results should return a (or the) shortest path that exists between members 176 and 802, and possibly other paths, subject to dynamic modification of the search.

In operation 304, separate from or as part of the search request or query, the controller receives zero or more parameters that may control or modify execution of the breadth-first search. In different embodiments, different types of parameters may be employed.

One illustrative parameter is a time-to-live (or TTL) parameter. A TTL parameter includes a time value (e.g., 100ms, 200ms, 300ms), and the search will terminate automatically when (or soon after) that period of time has elapsed after the search commences (e.g., after it is issued by the controller, after it is received at a first data server).

Another illustrative parameter is a maximum hop count (or MHC) parameter. A maximum hop count parameter includes an integer value identifying a number of hops (e.g., 4, 6, 8), and the search may terminate automatically upon reaching the indicated number of hops from the initial node or, in other words, after the search request is forwarded the specified number of times, from an initial data server that stores the first node (node 176), to one or more additional data servers.

In different implementations, if no paths have been identified by the time an MHC or TTL parameter is triggered, the search may terminate nonetheless. Alternatively, the search may continue until at least one path is identified, may continue until another parameter is triggered, etc.

Yet another illustrative parameter is a target hop count (or THC) parameter. A target hop count parameter includes one or two integer values. A single value will cause only paths that are equal in length to the specified hop count to be returned, while two values will cause only paths having lengths that are between the two values (inclusive or exclusive) to be returned.

In other embodiments, one or more execution parameters may be configured to modify or shape a search based on attributes of the nodes and/or edges of the distributed graph. For example, it may be desirable to identify only paths that traverse one or more nodes or edges having a particular attribute or, conversely, to reject paths that include a node or edge having the attribute.

By way of illustration, and not limitation, execution parameters may serve to prune (omit) paths that do not include at least one node that corresponds to an influencer (e.g., an influential member), paths that include nodes corresponding to members who work for different employers (i.e., only paths connecting members having a specified employer are desired), paths with heterogeneous edges, paths that include a node having fewer than a threshold number of first degree connections, and so on. Any node attribute or edge attribute of the distributed graph, or any combination of node attributes and edge attributes, may be used as execution parameters.

In operation 306, the controller identifies a first data server (or first cooperating cluster of data servers) that maintains the first node corresponding to member 176. In the environment of Figure 2, this is data server 226b. As shown in Figure 2, the controller may maintain a node map, routing table, or other data that maps nodes (or members) to the responsible data servers.

In operation 308, the controller issues the breadth-first search to the first data server. In the illustrated method, the search request identifies the first node (member 176), and the second node (member 802), and includes the operative parameters, if any were received in operation 304. The request may also include a timestamp that indicates when the request was issued by the controller, and may identify the controller so that the data servers will know where to send their results (if any results are produced).

In operation 310, the first data server examines its node data determine whether it includes a direct connection (e.g., a single edge) from the first node to the second node. As shown in the node data of Figure 2, member 176's node is not directly connected to member 802's node by a single edge. However, node 176 for member 176 has edges to several other members' nodes, and so the shortest path to member 802 will be through one or more of them (if there is any path at all to member 802 from member 176).

In some embodiments, a "direct connection" between two nodes may involve more than one edge, if all of the intervening nodes are stored on the same data server. Thus, if the first data server stored multiple nodes that, with corresponding edges, defined a path from node 176 to node 802, this could be a valid result that the data server would return to the controller (if it satisfied applicable execution parameters, if any).

In operation 312, if the current (e.g., first) data server's node data reveals a direct connection to the destination node, the method continues at operation 320. Otherwise, the illustrated method advances to operation 330.

In operation 320, the current data server determines whether it should report the direct connection(s) it has identified. One or more applicable execution parameters may cause the data server to invalidate one or more of the connections it uncovered, in which case those results are pruned (i.e., dropped).

Illustratively, a direct connection may be pruned because it is shorter than a minimum length or longer than a maximum length, because an operative parameter specifies that no results that include a particular node are to be returned (e.g., node 13), because the connection does not include a required intermediate node, or for some other reason.

If all of the direct connections it identified are pruned, the illustrated method advances to operation 330; otherwise, it continues at operation 322.

In operation 322, the current (e.g., first) data server reports its (valid) results directly to the controller that issued the breadth-first search request. As described above, the reported results may not include all direct connections the data server identified, but will include those that satisfy applicable execution parameters.

In optional operation 330, the current data server determines whether it should terminate the search. If the request is accompanied by a TTL parameter, for example, the accompanying time value may be applied to determine whether the request has expired. Alternatively, the request may include an MHC parameter that would be triggered or violated by adding another hop (e.g., by forwarding the search request to another data server), a maximum number of results parameter that was met in operation 322, etc.

If a TTL parameter, MHC parameter, or other parameter triggers termination of the search, the method ends. Otherwise, the method continues at operation 332. Operation 330 is optional because the request may not include a parameter that triggers termination of the search. In some embodiments, a decision as to whether to terminate or otherwise adjust the search may occur at different points (or multiple points) of the search.

In operation 332, the current (e.g., first) data server (server 226b) reissues or forwards the request to some or all other data servers - at least the data servers storing nodes that are directly connected to node 176 by a single edge. If the first data server has information identifying which data servers store which shards or which individual nodes, it can send the request just to those data servers. Alternatively, it may simply broadcast the request to some or all other data servers.

It may be noted that data center itself propagates the search request, instead of simply identifying the connected nodes to the controller and requiring the controller to do the propagation.

With or within the reissued or forwarded request, the data server identifies the originator of the request (i.e., the controller), the destination node (node 802), the timestamp of the request, and any operative parameters. The request also identifies the (partial) path or paths to the destination node that the current (e.g., first) data server has created or augmented. In this case, an illustrative current path may be represented as {176} if the search has only progressed to the edges of the initial node. As additional data servers process the search request on behalf of other nodes, the partial path will be extended. And, as the search branches (if it branches), multiple partial paths may be generated and updated with each hop.

Illustratively, a time-to-live parameter forwarded with the search request may be decremented by the amount of time the current data server spent processing the search result. Or, subsequent data servers may simply compare the TTL parameter and a difference between the timestamp and the current time in order to decide whether the TTL parameter has been triggered. Similarly, a maximum hop count or target hop count parameter may be decremented by one by the first data server. Or, the subsequent data servers may compare the MHC or THC parameter to the length of the partial path(s) that accompany the forwarded request, to determine if a hop-count parameter has been triggered.

In operation 334, node data of a data server that received the forwarded search request is searched for direct connections to the destination node (node 802) from the final node in the partial path or paths identified in the forwarded search request (e.g., node 176 after the first forwarding of the search request). Operation 334 and subsequent operations may be performed (in parallel) by multiple different data servers that received the forwarded search request.

The method then returns to operation 312, and more data servers become involved in the search. Ultimately, one or more valid paths between nodes 176 and 802 may be discovered and reported directly to the controller, or all possible paths will be explored but no paths will be found (or no paths that satisfy the execution parameters), or the search may time-out before any paths are discovered.

In some embodiments, a search may be modified at operation 330 (instead of being terminated) or at some other point in the process. For example, if execution parameters that accompany the search request include a THC parameter, and the required path length (for a one-value parameter) or minimum path length (for a two-value parameter) has not yet been met, a data server may simply identify outgoing edges and propagate the search request accordingly (without searching its node data for direct connections). Or, it may only search its node data for direct connections that satisfy the remaining path length requirements.

In other embodiments, operations depicted in Figure 3 may be conducted in some other order, or the method described may feature fewer or additional operations that provide the same or comparable result, without exceeding the scope of the invention.

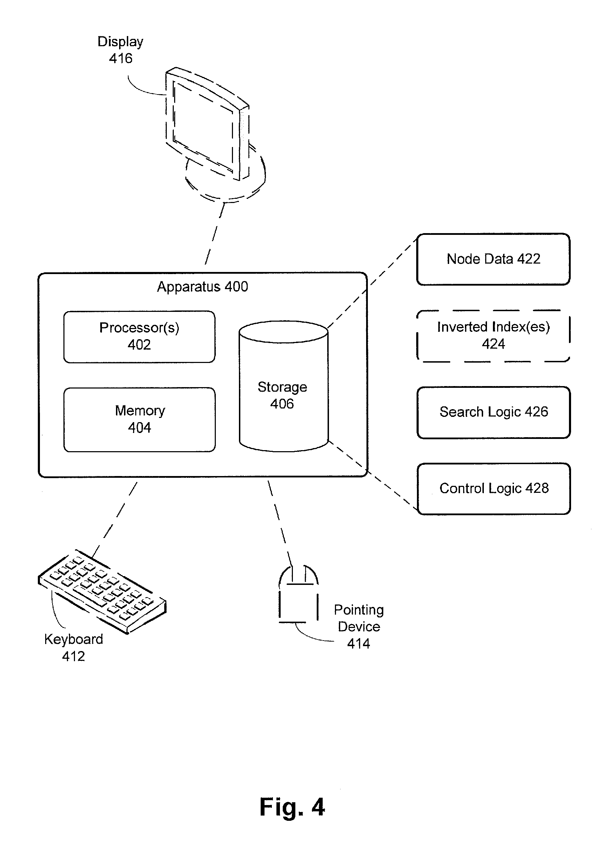

Figure 4 is a block diagram of an apparatus for searching a distributed graph sharded by node, according to some embodiments.

Apparatus 400 of Figure 4 comprises processor(s) 402, memory 404, and storage 406, which may comprise one or more optical, solid-state, and/or magnetic storage components. Storage 406 may be local or remote to the apparatus. Apparatus 400 may be coupled (permanently or temporarily) to keyboard 412, pointing device 414, and display 416. Multiple apparatuses 400 may cooperatively operate to store and traverse the distributed graph, or apparatus 400 may encompass multiple separate logical and/or physical components that operate similarly.

Storage 406 stores node data 422 comprising some number of nodes of the distributed graph, each node comprising an identifier of the node and/or an entity represented by the node (e.g., a member of a professional or social network), identities of edges or first-degree connections of the node (e.g., first-degree connections of the corresponding member), and possibly one or more attributes of the node. For example, if the node represents a member of a professional or social network, the attributes may include any number of personal, professional, social, and/or educational attributes of the member

Storage 406 may optionally store inverted index or indexes 424, which in some implementations comprise an index of all nodes that are directly connected (i.e., via single edges of the distributed graph) to nodes included in node data 422. Nodes identified in index 424 may or may not include any nodes in node data 422. In particular, some nodes within the node data will have direct connections to other nodes within the node data, and inverted index 424 may or may not reflect them.

Storage 406 also stores logic that may be loaded into memory 404 for execution by processor(s) 402. Such logic includes search logic 426 and control logic 428. In other embodiments, these logic modules and/or other content may be combined or divided to aggregate or separate their functionality as desired.

Search logic 426 comprises processor-executable instructions for receiving, executing, propagating, and responding as warranted to a query or search request involving nodes of the distributed graph stored at the apparatus. For example, as part of a breadth-first search, nodes and corresponding attributes (e.g., edges, data associated with corresponding members) may be examined to find a path between two nodes (e.g., the shortest path, an illustrative path, a path length), to find a number of nodes that are directly connected to a particular destination node, to find one or more intermediate nodes through which a first node is connected to a second node, paths that connect a first node to a second node and that include (or that omit) a specific intermediate node, and so on. If responsive data are identified (e.g., if a requested path is identified), the data are returned directly to an originator of the query or search request (e.g., a controller). If no responsive data are identified, the search may be propagated directly to other apparatuses or to other components of apparatus 400.

Control logic 428 comprises processor-executable instructions for controlling, altering, or terminating execution of a query or search request. For example, control logic 428 may include or be associated with one or more parameters that, when triggered, change how a search is conducted, terminate a search, eliminate one or more results or candidate results from being reported, etc.

In some embodiments of the invention, apparatus 400 performs most or all of the functions ascribed to a data server 226 of Figure 2, and possibly controller 216. Therefore, the apparatus may include other components and/or logic to facilitate maintenance and searching of a node-sharded graph.

Although the above processing has been described in a particular application context, it will be appreciated that the processing is not dependent upon this particular application context. Rather, the processing described herein can be used to facilitate searching of any distributed data set having a graph structure of nodes and edges. This structure applies generally to relational database systems, which are defined in terms of entities (nodes) having relations (connections) between the entities. Examples of data sets that can potentially be searched using the approach described herein include, without limitation, representations of computer or communications networks, representations of components and routing and a semiconductor device, patent families, epidemiological data sets, dependency mappings in any physical or logical system, product databases, and so on.

An environment in which one or more embodiments described above are executed may incorporate a general-purpose computer or a special-purpose device such as a hand-held computer or communication device. Some details of such devices (e.g., processor, memory, data storage, display) may be omitted for the sake of clarity. A component such as a processor or memory to which one or more tasks or functions are attributed may be a general component temporarily configured to perform the specified task or function, or may be a specific component manufactured to perform the task or function. The term "processor" as used herein refers to one or more electronic circuits, devices, chips, processing cores and/or other components configured to process data and/or computer program code.

Data structures and program code described in this detailed description are typically stored on a non-transitory computer-readable storage medium, which may be any device or medium that can store code and/or data for use by a computer system. Non-transitory computer-readable storage media include, but are not limited to, volatile memory, non-volatile memory, magnetic and optical storage devices such as disk drives, magnetic tape, CDs (compact discs) and DVDs (digital versatile discs or digital video discs), solid-state drives and/or other non-transitory computer-readable media now known or later developed.

Methods and processes described in the detailed description can be embodied as code and/or data, which may be stored in a non-transitory computer-readable storage medium as described above. When a processor or computer system reads and executes the code and manipulates the data stored on the medium, the processor or computer system performs the methods and processes embodied as code and data structures and stored within the medium.

Furthermore, the methods and processes may be programmed into hardware modules such as, but not limited to, application-specific integrated circuit (ASIC) chips, field-programmable gate arrays (FPGAs), and other programmable-logic devices now known or hereafter developed. When such a hardware module is activated, it performs the methods and processed included within the module.

The foregoing embodiments have been presented for purposes of illustration and description only. They are not intended to be exhaustive or to limit this disclosure to the forms disclosed. Accordingly, many modifications and variations will be apparent to practitioners skilled in the art. The scope is defined by the appended claims, not the preceding disclosure.

Various embodiments of the invention are set out in following numbered clauses. Please note that the different embodiments should not be seen as mutually exclusive. For example, the skilled person will understand that clauses 16 and 21 may represent different descriptions of a single system, and hence subsidiary features of clauses 17 through 20 may also be relevant to the system of claim 16 (and conversely, clauses 22 and 23 may be relevant to the system of clause 16). The same understanding applies to the method claims. More generally, the skilled person will appreciate that the features specified in the clauses may be combined as appropriate for any given implementation, such that features specified for a given clause below may be omitted, replaced or supplemented depending upon the particular circumstances of the implementation.
1. A method of searching a distributed graph sharded by node, the method comprising:
   receiving, at a first node repository storing a first shard of the distributed graph, a search request regarding a first node and a second node;
   operating a processor of the first node repository to determine whether the first shard comprises a direct connection between the first node and the second node; and
   if the first shard does not comprise a direct connection between the first node and the second node,
   propagating the search request directly to one or more other node repositories storing other shards of the distributed graph.
2. The method of clause 1, wherein:
   the first shard comprises a first set of nodes of the distributed graph; and
   each node in the first set of nodes comprises at least one edge connecting the node to another node of the distributed graph.
3. The method of clause 1 or 2, wherein the first shard comprises a direct connection from the first node to the second node if:
   the first shard comprises the first node; and
   the first node comprises an edge directly connecting the first node to the second node.
4. The method of any preceding clause, wherein the first shard comprises a direct connection from the first node to the second node if:
   the first shard comprises a plurality of nodes, including the first node, such that the plurality of nodes comprises multiple edges defining a path between the first node and the second node.
5. The method of any preceding clause, wherein:
   the search request is a request for a path from the first node to the second node; and
   the search request is received from a controller configured to manage searches of the distributed graph;
   wherein no response to the search request is returned to the controller from the first node repository if the first shard does not comprise a direct connection between the first node and the second node.
6. The method of any of clauses 1 to 4, wherein:
   the search request is a request for a path from an origination node to the second node, the origination node being different from the first node;
   the search request comprises a partial path from the origination node to the second node, the partial path terminating at the first node; and
   the search request is received from another node repository.
7. A method of searching a distributed graph sharded by node, the method comprising:
   (a) at a first node repository storing a first node of the distributed graph, operating a first processor to:
      (i) receive from a search controller a search request regarding the first node and a second node;
      (ii) determine whether the first node is directly connected to the second node; and
      (iii) if the first node is not directly connected to the second node, forward the search request to one or more additional node repositories storing other nodes directly connected to the first node, the forwarded search request comprising:
         (1) a partial path from the first node to the second node, the partial path comprising the first node; and
         (2) an identifier of the second node; and
   (b) at an additional node repository, operating an additional processor to:
      (i) determine whether a node stored at the additional node repository is directly connected to both the second node and a last node in the partial path;
      (ii) if a given node stored at the additional node repository is directly connected to both the second node and the last node in the partial path, transmit a result of the requested search directly to the search controller;
      (iii) adjust the requested search if one of the one or more operating parameters is triggered; and
      (iv) if no node stored at the additional node repository is directly connected to both the second node and a last node in the partial path:
         (1) add to the partial path at least one node stored at the additional node repository that is directly connected to the last node of the partial path;
         (2) re-forward the search request to one or more additional node repositories storing other nodes directly connected to the at least one node; and
         (3) repeat (b).
8. The method of clause 7, wherein:
   the forwarded search request further comprises a time-to-live parameter identifying a period of time;
   the time-to-live parameter is triggered when the period of time elapses after receipt of the search request from the search controller; and
   triggering of the time-to-live parameter causes the search request to terminate.
9. The method of clause 7 or 8, wherein:
   the forwarded search request further comprises a maximum hop count parameter identifying a number of hops;
   the maximum hop count parameter is triggered when a length of the partial path matches the number of hops; and
   triggering of the maximum hop count parameter causes the search request to terminate.
10. The method of any of clauses 7 to 9, wherein the search request seeks identification of a shortest path from the first node to the second node.
11. The method of any of clauses 7 to 9, wherein the search request seeks identification of a length of a path between the first node and the second node.
12. The method of any of clauses 7 to 11, further comprising, at each of the node repositories, prior to receiving the search request:
   storing a subset of nodes of the distributed graph, each stored node comprising:
      identifiers of one or more other nodes directly connected to the stored node; and
      one or more attributes of the stored node.
13. The method of any of clauses 7 to 12, wherein one node is directly connected to another node if the distributed graph includes a single edge connecting the one node and the other node.
14. The method of any of clauses 7 to 12, wherein one node is directly connected to another node if a single node repository stores a set of nodes having edges that define a path between the one node and the other node.
15. A non-transitory computer-readable medium storing instructions that, when executed by a processor, cause the processor to perform a method of searching a distributed graph sharded by node, the method comprising:
   (a) at a first node repository storing a first node of the distributed graph:
      (i) receiving from a search controller a search request regarding the first node and a second node;
      (ii) determining whether the first node is directly connected to the second node; and
      (iii) if the first node is not directly connected to the second node, forwarding the search request to one or more additional node repositories storing other nodes directly connected to the first node, the forwarded search request comprising:
         (1) a partial path from the first node to the second node, the partial path comprising the first node; and
         (2) an identifier of the second node; and
   (b) at an additional node repository:
      (i) determining whether a node stored at the additional node repository is directly connected to both the second node and a last node in the partial path;
      (ii) if a given node stored at the additional node repository is directly connected to both the second node and the last node in the partial path, transmitting a result of the requested search directly to the search controller;
      (iii) adjusting the requested search if one of the one or more operating parameters is triggered; and
      (iv) if no node stored at the additional node repository is directly connected to both the second node and a last node in the partial path:
         (1) adding to the partial path at least one node stored at the additional node repository that is directly connected to the last node of the partial path;
         (2) re-forwarding the search request to one or more additional node repositories storing other nodes directly connected to the at least one node; and
         (3) repeating (b).
16. A system for searching a distributed graph sharded by node, comprising:
   a controller that receives queries regarding the distributed graph; and
   multiple node repositories, each node repository comprising:
      storage containing multiple nodes of the distributed graph;
      one or more processors; and
      memory storing instructions that, when executed by the one or more processors, cause the node repository to:
         receive a search request identifying a first node and a second node;
         search the multiple nodes for a direct connection between the first node and the second node;
         if the multiple nodes include a direct connection between the first node and the second node, report the direct connection to the controller; and
         propagate the search result directly to one or more other node repositories.
17. The system of clause 16, wherein the storage further comprises:
   for each of the multiple nodes, one or more edges that connect the node to one other node.
18. The system of clause 16 or 17, wherein the storage further comprises:
   for each of the multiple nodes, one or more attributes.
19. The system of any of clauses 16 to 18, wherein:
   the search request comprises a time-to-live parameter identifying a period of time;
   the time-to-live parameter is triggered when the period of time elapses after issuance of the search request by the controller; and
   triggering of the time-to-live parameter causes the search to terminate.
20. The system of any of clauses 16 to 19, wherein:
   the search request comprises a maximum hop count parameter identifying a number of hops;
   the maximum hop count parameter is triggered when a length of a first direct connection meets or exceeds the number of hops; and
   triggering of the maximum hop count parameter causes the first direct connection to be abandoned.
21. Apparatus for searching a distributed graph sharded by node, the apparatus comprising:
   one or more node repositories storing nodes of the distributed graph;
   one or more processors; and
   memory storing instructions that, when executed by the one or more processors, cause the apparatus to:
      issue a search request regarding a first node and a second node of the distributed graph; and
      at each node repository that receives the search request:
         search for a direct connection to the second node; and
         if no direct connection is identified to the second node at the node repository:
            extend a partial path between the first node and the second node; and
            propagate the search request directly to at least one other node repository.
22. The apparatus of clause 21, wherein:
   the search request comprises a time-to-live parameter identifying a period of time;
   the time-to-live parameter is triggered when the period of time elapses after issuance of the search request by the controller; and
   triggering of the time-to-live parameter causes the search to terminate.
23. The apparatus of clause 21 or 22, wherein:
   the search request comprises a maximum hop count parameter identifying a number of hops;
   the maximum hop count parameter is triggered when a length of a first direct connection meets or exceeds the number of hops; and
   triggering of the maximum hop count parameter causes the first direct connection to be abandoned.

## Claims

1. A computer-implemented method of searching a distributed graph sharded by node across a computer system comprising multiple node repositories, the method comprising:
receiving, at a first node repository storing a first shard of the distributed graph, a search request regarding a first node and a second node;
operating a processor of the first node repository to determine whether the first shard comprises a direct connection between the first node and the second node; and
if the first shard does not comprise a direct connection between the first node and the second node, propagating the search request directly to one or more other node repositories storing other shards of the distributed graph.

2. The method of claim 1, wherein:
the first shard comprises a first set of nodes of the distributed graph; and
each node in the first set of nodes comprises at least one edge connecting the node to another node of the distributed graph.

3. The method of claim 1 or 2, wherein the first shard comprises a direct connection from the first node to the second node if:
the first shard comprises the first node, and the first node comprises an edge directly connecting the first node to the second node; and/or
if the first shard comprises a plurality of nodes, including the first node, such that the plurality of nodes comprises multiple edges defining a path between the first node and the second node.

4. The method of any preceding claim, wherein:
the search request is a request for a path from the first node to the second node; and
the search request is received from a controller configured to manage searches of the distributed graph;
wherein no response to the search request is returned to the controller from the first node repository if the first shard does not comprise a direct connection between the first node and the second node.

5. The method of any of claims 1 to 3, wherein:
the search request is a request for a path from an origination node to the second node, the origination node being different from the first node;
the search request comprises a partial path from the origination node to the second node, the partial path terminating at the first node; and
the search request is received from another node repository.

6. A method of searching a distributed graph sharded by node, the method comprising:
(a) at a first node repository storing a first node of the distributed graph, operating a first processor to:
(i) receive from a search controller a search request regarding the first node and a second node;
(ii) determine whether the first node is directly connected to the second node; and
(iii) if the first node is not directly connected to the second node, forward the search request to one or more additional node repositories storing other nodes directly connected to the first node, the forwarded search request comprising:
(1) a partial path from the first node to the second node, the partial path comprising the first node; and
(2) an identifier of the second node; and
(b) at an additional node repository, operating an additional processor to:
(i) determine whether a node stored at the additional node repository is directly connected to both the second node and a last node in the partial path;
(ii) if a given node stored at the additional node repository is directly connected to both the second node and the last node in the partial path, transmit a result of the requested search directly to the search controller;
(iii) adjust the requested search if one of the one or more operating parameters is triggered; and
(iv) if no node stored at the additional node repository is directly connected to both the second node and a last node in the partial path:
(1) add to the partial path at least one node stored at the additional node repository that is directly connected to the last node of the partial path;
(2) re-forward the search request to one or more additional node repositories storing other nodes directly connected to the at least one node; and
(3) repeat (b).

7. The method of claim 6, wherein:
the forwarded search request further comprises a time-to-live parameter identifying a period of time;
the time-to-live parameter is triggered when the period of time elapses after receipt of the search request from the search controller; and
triggering of the time-to-live parameter causes the search request to terminate.

8. The method of claim 6 or 7, wherein:
the forwarded search request further comprises a maximum hop count parameter identifying a number of hops;
the maximum hop count parameter is triggered when a length of the partial path matches the number of hops; and
triggering of the maximum hop count parameter causes the search request to terminate.

9. The method of any of claims 6 to 8, wherein the search request seeks identification of a shortest path from the first node to the second node and/or identification of a length of a path between the first node and the second node.

10. The method of any of claims 6 to 9, further comprising, at each of the node repositories, prior to receiving the search request:
storing a subset of nodes of the distributed graph, each stored node comprising:
identifiers of one or more other nodes directly connected to the stored node; and/or
one or more attributes of the stored node.
and wherein one node is directly connected to another node if the distributed graph includes a single edge connecting the one node and the other node, or if a single node repository stores a set of nodes having edges that define a path between the one node and the other node.

11. A non-transitory computer-readable medium storing instructions that, when executed by a processor, cause the processor to perform a method of searching a distributed graph sharded by node, the method comprising:

12. A system for searching a distributed graph sharded by node, comprising:
a controller that receives queries regarding the distributed graph; and
multiple node repositories, each node repository comprising:
storage containing multiple nodes of the distributed graph;
one or more processors; and
memory storing instructions that, when executed by the one or more processors, cause the node repository to:
receive a search request identifying a first node and a second node;
search the multiple nodes for a direct connection between the first node and the second node;
if the multiple nodes include a direct connection between the first node and the second node, report the direct connection to the controller; and
propagate the search result directly to one or more other node repositories.

13. The system of claim 12, wherein the storage further comprises:
for each of the multiple nodes, one or more edges that connect the node to one other node and/or one or more attributes.

14. A system for searching a distributed graph sharded by node, the system comprising:
one or more node repositories storing nodes of the distributed graph;
one or more processors; and
memory storing instructions that, when executed by the one or more processors, cause the apparatus to:
issue a search request regarding a first node and a second node of the distributed graph; and at each node repository that receives the search request:
search for a direct connection to the second node; and
if no direct connection is identified to the second node at the node repository:
extend a partial path between the first node and the second node; and
propagate the search request directly to at least one other node repository.

15. The system of any of claims 12 to 14, wherein:
the search request comprises a time-to-live parameter identifying a period of time;
the time-to-live parameter is triggered when the period of time elapses after issuance of the search request by the controller; and
triggering of the time-to-live parameter causes the search to terminate.
and/or wherein the search request comprises a maximum hop count parameter identifying a number of hops;
the maximum hop count parameter is triggered when a length of a first direct connection meets or exceeds the number of hops; and
triggering of the maximum hop count parameter causes the first direct connection to be abandoned.
